# EUROPEAN PATENT SPECIFICATION

(11) **EP 1 954 744 B1**
(45) Date of publication and mention of the grant of the patent: **19.10.2016**
(21) Application number: 06818888.7
(22) Date of filing: 28.11.2006
(51) Int. Cl.: C08J 3/24, C08J 3/28

(54) **METHOD OF PREPARING SHAPE MEMORY MATERIALS STARTING FROM STANDARD THERMOPLASTIC POLYMERS**
VERFAHREN ZUR HERSTELLUNG VON FORMGEDÄCHTNISMATERIALIEN AUS STANDARDMÄSSIGEN THERMOPLASTISCHEN POLYMEREN
PROCEDE DE PREPARATION DE MATERIAUX A MEMOIRE DE FORME A PARTIR DE POLYMERES THERMOPLASTIQUES COMMUNS

(30) Priority: 28.11.2005 EP 05025908
(43) Date of publication of application: 13.08.2008
(73) Proprietor: Helmholtz-Zentrum Geesthacht Zentrum für Material- und Küstenforschung GmbH, 21502 Geesthacht (DE)
(72) Inventor: LENDLEIN, Andreas, 14167 Berlin (DE)
(74) Representative: Gulde & Partner
(86) International application number: PCT/EP2006/011427
(87) International publication number: WO 2007/060022

(56) References cited:
- EP-A- 0 831 119
- US-A1- 2002 065 373
- US-A1- 2004 266 940
- PATENT ABSTRACTS OF JAPAN vol. 2000, no. 07, 29 September 2000 (2000-09-29) & JP 2000 119465 A (TOKAI RUBBER IND LTD), 25 April 2000 (2000-04-25)
- PATENT ABSTRACTS OF JAPAN vol. 011, no. 075 (C-408), 6 March 1987 (1987-03-06) & JP 61 231051 A (SUMITOMO ELECTRIC IND LTD), 15 October 1986 (1986-10-15)

## Description

The present invention concerns methods of preparing shape memory materials starting from standard thermoplastic polymers. The present invention further is concerned with products obtained by the methods in accordance with the present invention and the use of these products over a wide variety of applications.

Shape memory materials are an interesting class of materials which have been investigated in the recent years. Shape memory functionality is the ability of a material to temporarily fix a second shape after an elastic deformation and only recover its original shape after application of an external stimulus. While this effect is one-way, reversible shape changes induced by cooling and heating, i.e. a two-way effect may also be realized.

Such a phenomenon is based on a structural phase transformation within the material. The advantageous and intriguing properties of these materials are in particular the possibility to initiate a desired change in shape by an appropriate external stimulus, so that an original shape, after deformation, is re-established, and the possibility to deform and program these materials so that highly specific configurations and shape changes can be obtained. The deformed shape is often called the temporary shape in the art. The phenomenon is a functionality and not an inherent material property. The effect/functionality results from a combination of polymer structure and specific functionalization processes.

The first materials known to provide this functionality were shape memory metal alloys. In the recent past, shape memory polymers have been developed. Typical shape memory polymers are, for example, phase segregated linear block copolymers, having a hard segment and a switching segment. A drawback of these materials is the requirement of laborious chemical synthesis, together with the requirement of using high-priced starting materials. Important representatives of these types of materials are disclosed in the international publications WO 99/42147 and WO 99/42528.

The phenomenon of shape memory property is generally defined as a function of the material as such, after suitable programming steps (deformation and fixation in the deformed state). As outlined above, an external stimulus can trigger a change in shape retransforming the material from the temperature shape to the original, i.e. permanent shape.

It is important however to clearly distinguish the shape memory effect as provided by the present invention (see below) from effects described in the art as shape memory which are however only not well defined shape changes, such as heat shrinking. The important aspect associated with the term shape memory effect as used in accordance with the present invention is the fact that such as shape memory effect refers to shape changes induced by external stimuli and which lead to a recovery of a previously programmed shape. This previously programmed shape recovered after deformation and may involve complex shape changes, such as the transformation of a straight fiber to a spiral or the transformation of a cross-shaped sheet into a cube. Important in this respect is further that this recovered shape is gained without requiring a corresponding mold/perform to be present which is used by the shape memory material as guidance for the shape transformation. To the contrary, the shape transformation induced yields the recovered shape without such a form present. This distinguishes the shape memory effect as described herein from only unspecified shrinking processes, such as seen with heat shrinkable films which shrink around a good to be packaged, where the final shape of the heat shrink film however is not the result of a previous programming and accordingly a shape memory effect as displayed in the present invention, but merely the result of the physical resistance finally provided by the good to be packaged which prevents further shrinking. It also has to be emphasised that the term shape memory is often used in the art as an alternative way of defining the tendency of a material to retain a given shape, an effect which again must not be confused with the term shape memory effect/ shape memory material as used in the present application.

Examples of prior art documents citing the term shape memory but referring to heat shrinking or shape retention only are EP 0 831 119 A2, US 2002/0065373 A1, JP-A-2000-119465, US 6,596,818 B1 and US 6,592,550 B1.

EP 0831 119 A2 discloses a crosslinkable polymer composition comprising a non-crystalline polymer and a crosslinkable monomer capable of binding molecular chains of the polymer by irradiation with active energy ray. The composition may also include fillers.

US 2002/0065373 A1 relates to heat shrinkable articles made of a thermoplastic polyurethane. The thermoplastic polyurethane is prepared from a mixture of an aliphatic or aromatic isocyanate and one or more polyfunctional reactive monomer crosslinkers, such as N,N'-methylenebisacrylamide etc. The material performs shrinking upon heating and is not able to undergo complex shape transitions.

JP 2000-119465 A discloses a resin prepared from a mixture of polystyrene, an isoprene rubber and a sulphur-based crosslinker such as dipentaethylene thiuram pentasulfide. This material is also not a shape memory material in the meaning of the present invention.

The present invention attempts to overcome the drawbacks associated with the materials known in the prior art. In particular, the present invention aims to enable the preparation of shape memory materials which can rely on the use of cheap starting materials and simple processing means, desirably standard processing equipment in the field of polymer technology.

### Brief description of the invention

The above objects have been solved with the method for preparing shape memory materials as defined in claim 1. Preferred embodiments are defined in claims 2 to 5. Claims 6 to 11 define shape memory materials in accordance with the present invention while claims 12 to 14 describe suitable uses of such materials.

### Brief description of the figures

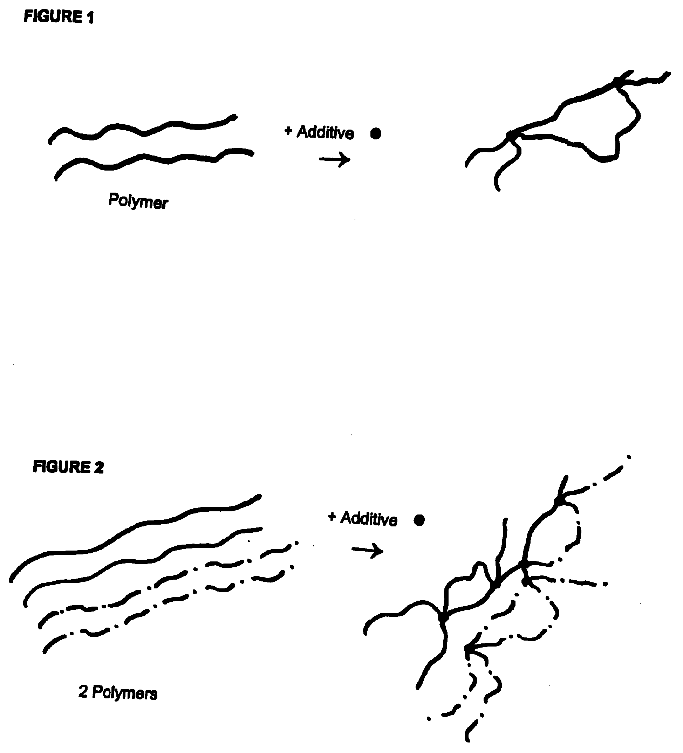

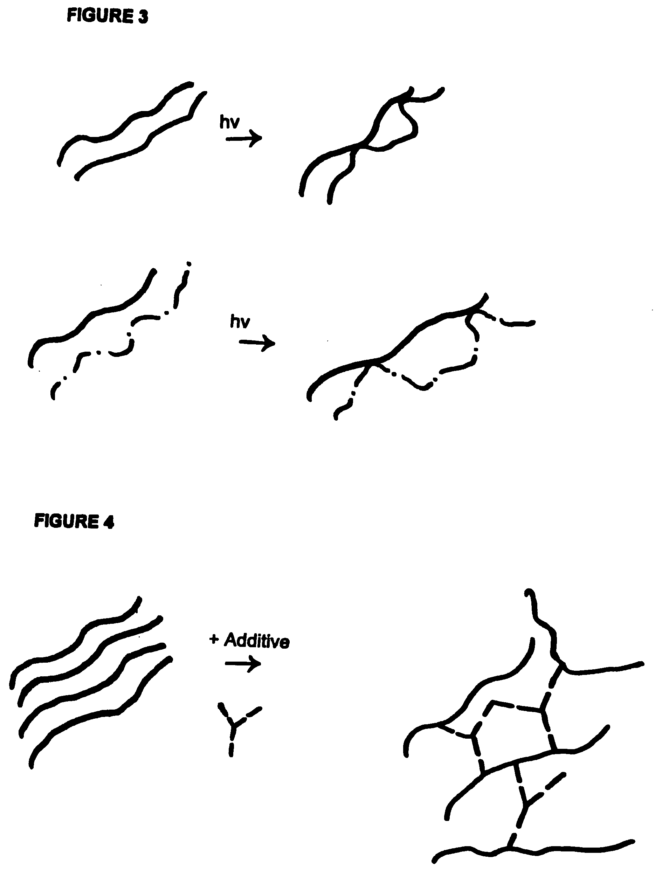

Figures 1, 2, and 4 show schematic representations of embodiments of the present invention discussed in further detail below. Figure 3 shows a schematic representation of an alternative method not forming part of the present invention.

### Detailed description of the present invention

The present invention provides a possibility to prepare shape memory materials based on cheap starting materials, typically thermoplastic polymers, using standard polymer processing equipment. These starting materials are subjected to the process as identified herein in order to yield new shape memory materials (also compounds).

Typical starting materials which can be used in accordance with the present invention are in particular established engineering plastics, including homopolymers and copolymers, such as polyamides (PA), for example nylon 6, polyesters, such as polyethylene-terephthalat (PET), polypropyleneterephthalat (PPT), polycarbonates (PC), acrylnitrile-butadiene-styrene (ABS) block copolymers as well as other thermoplastic materials, such as vinyl polymers or polyolefins, in particular polyvinylchloride (PVC), polyvinylpyrrolidone (PVP), polyacrylonitrile (PAN), polystyrene (PS) and polyethylene (PE), polypropylene (PP), copolymers of ethylene and propylene, polyether, polyurethanes (PUR) etc. The methods in accordance with the present invention enable to prepare shape memory materials from these standard polymers by simple reactions using standard polymer processing equipment, in accordance with any of the principle options outlined below.

The present invention provides the possibility to obtain shape memory materials by carrying out a crosslinking reaction, either by physical methods, such as irradiation, leading to the generation of radicals in the polymer which in turn yield covalent crosslinks, or by using an additive, which may suitably be activated to produce radicals by irradiation, such as electron radiation or heat treatment. Suitable energy levels for electron radiation are 0.1 to 10 MeV at doses of from 5 to 500 kGy.

By appropriately assembling the components, i.e. starting standard polymer and shape memory additive it is possible to tailor the shape memory functionality of the resulting compound, for example one-shape memory functionality or two-shape or multi-shape memory functionality. This requires the provision of different phases within the compound, in accordance with the basic theory of shape memory functionality as for example derivable from the above mentioned international patent applications. The fact that the present invention enables the provision of materials derived from standard polymers having shape memory functionality may be explained, without being bound to the theory, on the basis of the following observations on a molecular level within the compound prepared.

Using one type of polymer and one shape memory additive providing direct chemical, covalent crosslinks between the polymer chains, "loops" are provided (see figure 1) which correspond to switching segments / switching phases. It is only required that this segment/phase possesses a transition temperature, for example in association with a glass transition, crystallisation processes etc. Using two different types of standard polymers and one type of shape memory additives "loops" of different kind and/or different composition may be obtained, corresponding to multiple phases enabling the preparation of compounds comprising at least two different (switching) phases enabling the possibility of multi-shape memory functionality (see figure 2). The above outlined two embodiments may also be established by using suitably reactive polymers which may be crosslinked by irradiation without the use of shape memory additives (see figure 3, not part of the present invention). A further embodiment is the use of multifunctional shape memory additives providing crosslinks and bridging groups not only between two polymer chains but between multiple chains (see figure 4). This embodiment also may provide more than one phase, i.e. enabling multi-shape memory functionality.

The first possibility to prepare shape memory materials from standard polymers is the melt compounding of a standard polymer, or a mixture of two, three or more different standard polymers with additives which are designated shape memory additives in the following, which enable the establishment of chemical or physical network points or crosslinking points in the compounded composition during a subsequent processing step. During this process or during subsequent processing steps, further additives can be included, such as antioxidants, UV absorbers, fillers, reinforcement materials, coloring agents, processing aids etc. Shape memory additives in accordance with the present option are reactive fillers. In the context of the present invention reactive means that a reaction as described above to establish chemical or physical network points or crosslinking points can be achieved by suitable means like irradiation, such as temperature treatment, IR irradiation, gamma-, beta- irradiation, magnetic and/or electric fields, VIS or UV light. When subjected to a melt compounding process with standard polymers, such as those mentioned above, a granulate can be obtained, which may be subjected to a subsequent melt processing step, for example injection molding or extrusion, depending on the type of materials employed and the type of product desired. After this melt processing leading to the formation of molded products, a suitable post-processing treatment is carried out, in order to provide the chemical or physical crosslinks within the material. The shape as obtained after subjecting the molding to post-processing then defines the permanent shape of the material obtained. This material, in the molded form, can then be subjected to further processing steps, in particular processing steps leading to a deformation (change in shape). Suitable methods are in particular methods involving heat treatment steps in order to soften the material, followed by treatment steps involving for example a mechanical deformation, followed by cooling in order to fix the material in the deformed state. This deformed state, in accordance with the principles of shape memory materials then defines the temporary shape. Depending on the type of material, the permanent shape, i.e. the original shape after melt processing and post-processing prior to any deformation, can then be recovered upon subjection to a suitable external stimulus, for example a raise in temperature. Upon such an external stimulus, for example a raise in temperature, the material becomes again more flexible so that it reverts to the original, permanent shape.

With respect to the permanent shape and the programmed, temporary shape, the following can be stated in connection with the above-disclosed method. The permanent shape requires the possibility of processing by usual polymer processing equipment, in particular injection molding or extrusion. This provides a molded body in the permanent shape, which, however has not been fixed. Fixation of the permanent shape occurs by suitable post processing leading to the formation of the crosslinks within the material.

The programmed, temporary shape is obtained in a programming step by controlled deformation at a certain temperature. This temperature usually is well above room temperature or the service, lifetime temperature of the product. After heating and deformation, the deformed shape is fixed by cooling to room temperature or service temperature so that the molded programmed product maintains the deformed temporary shape. An alternative to these heating/deformation/cooling processes is the use of cold drawing (stretching of the material at low temperatures without causing irreversible shape changes). Recovery to the permanent shape (memorized shape) then occurs after being subjected to an external stimulus, usually a specific raise in temperature.

As outlined above, shape memory additives according to the present invention are reactive particles, such as fillers having on the surface thereof reactive groups.In this way, as discussed in further detail below, a physical or chemical crosslink is provided with the polymer chains. The type of these additives, i.e. the shape memory additives, depends on the type of polymer used. Another illustrative crosslinking material is TAIC, TAC or similar compounds, such as di- or tri-functional acrylates and methacrylates. The addition amount of such shape memory additives may vary over a broad range and depends from the system polymer/shape memory additive employed as well as the desired physical properties of the shape memory material to be prepared. Suitable ranges are however 0.1 to 12 wt%, based on the sum of polymer(s) and shape memory additive, preferably 0.5 to 10 wt% and in embodiments 0.8 to 7.5 wt%. Suitable addition amounts can furthermore be derived from the examples. For example, reactive particles with hydroxyl groups on the surface thereof may be used in combination with difunctional organic acid chlorides and suitably reactive polymers (polyester, polyamides) or reactive particles as mentioned before with linear polyesters, optional in combination with esterification catalysts, or organic diisocyanates and suitably reactive polymers.

Typical post-processing reactions required in order to establish these crosslinks are heat treatments in order to activate the crosslinking agents or treatment by irradiation as discussed above in order to activate and facilitate crosslinking.

Preferred in accordance with the present invention are chemical crosslinks since these usually provide the most stable crosslinks so that stable and well-defined materials can be obtained. It is, however, also possible to provide physical crosslinks, for example when using polymers having supramolecular coordination segments in combination with agents providing an interacting counterpart.

The method in accordance with the present invention employs the crosslinking of standard polymers using reactive particles, such as fillers having on the surface thereof reactive groups, so that a physical or chemical crosslink with the polymer chains can be established. Examples for such reactive fillers, useful for the present invention, are modified silica, micro beads, micro gels etc. The main processing steps in accordance with this preferred embodiment of the present invention are again similar to those discussed above. Namely, the starting material, such as a polyamide, a polyester, a polycarbonate, or a styrene polymer is compounded with a suitable reactive filler. It is optional to add to this mixture further agents supporting the reaction between polymer and reactive filler. It is for example suitable to include catalysts and/or further reactive agents, for example agents reactive towards the functional/reactive groups on the surface of the reactive filler and reactive groups/functions of the polymer. This compound then can be subjected to a suitable shaping process, for example by ejection molding. The permanent shape is then fixed by means of a reaction giving rise to the crosslinks within the material. The temporary shape can then be obtained by a suitable programming step, including in particular heating and deformation, followed by cooling in order to fix the temporary shape.

As outlined above, the fixation of the permanent shape usually occurs by post-crosslinking using either heat treatment or irradiation treatments. Suitable irradiations are in particular IR irradiation, UV radiation, β-radiation, γ-radiation etc., which has to be selected in accordance with the type of starting polymer and the type, shape and thickness of the object as well as the type of crosslinking agent employed.

Highly suitable examples of polymeric starting materials, and crosslinking reactions/initiation as well as shape memory additives are given below:
Polyamides (PA 66/ PA 6/PA 12/ PA 11/ PA610/ copolyamides) - radiation crosslinking
Polyesters (PCL / PBT / PET) - radiation crosslinking
Polycarbonates - radiation crosslinking
Polyolefins (LDPE / HDPE / EVA / PP / Cycloolefin copollyolefin) - radiation crosslinking
Styrenics (ABS / SAN / PS / ASA) - radiation croslinking
Polyethers (POM / PEO / PPO) - radiation crosslinking
Polyacrylates (PMMA / ethylene/MAA/Na ionomer) - radiation crosslinking
Polyvinyl polymers (PVC) - radiation crosslinking

One important advantage of the methods disclosed above is the fact that standard polymer processing equipment can be used in order to prepare and program the shape memory materials. The initial compounding of standard polymer and shape memory additive may in particular be carried out in mixers or extruders, so that typical intermediate products such as granules of compounded materials are obtained. This represents a further advantage of the present invention since these compounded mixtures may be easily packaged and transported, so that the place of manufacture of the final product can be different from the place of manufacturing the intermediate compounded mixture.

The process in accordance with the present invention enables the preparation of shape memory materials starting from commercially available polymers, which is a particular cost advantage. Depending on the type of crosslinking treatment and combination of polymer/shape memory additive/treatment the present invention enables the provision of materials having numerous interesting properties:
Shelf life: the programmed material does not loose its shape memory property for a desired period of time, such as from 1 month to 10 years. Also the programmed permanent shape is not lost in this period of time.

Precise initiation of shape memory effect: for temperature initiated materials the shape memory effect is initiated within a rather small temperature window, such as about 5° K.

Selection of shape memory temperature: for temperature sensitive materials the triggering temperature (initiating change to permanent shape can be tailored to ranges such as 20 to 80°C, preferably 40 to 60°C, while higher temperatures are also possible, such as temperatures above 80°C, preferably above 100°C

As outlined above, the present invention enables the preparation of shape memory materials starting from rather cheap and easily available standard polymers, typically thermoplastic polymers. This approach widens the possibility for applications of shape memory materials since low cost shape memory materials are provided which furthermore can be produced using standard polymer processing equipment. The shape memory materials prepared in accordance with the present invention may comprise, depending from the desired end-application, additional components, such as fillers or reinforcement agents (talc, fibres, such as glass fibers, thermoset polymer beads etc.), colorants, stabilizer (light, UV, heat) as well as other auxiliary agents. These may be added during the preparation or thereafter, depending on the type and amount to be added. Polymers according to the invention, that are particularly preferred to be enforced by fibres are polyamides and PET.

In accordance with the above, the present invention provides shape memory materials, obtainable by any of the processes outlined above. The shape memory materials in accordance with the present invention are characterized in that they comprise a standard polymer, typically a thermoplastic polymer, compounded together with a suitable crosslinking agent. In order to prepare the shape memory material, a suitable post-processing after the formation of a molded product has to be carried in order to establish a permanent shape. The temporary shape can then be obtained by usual programming steps, typically including heat treatment, deformation and cooling. Thereafter, the shape memory materials in accordance with the present invention are present in the temperature shape. The permanent shape can again be recovered by a suitable external stimulus, typically a temperature rise.

In view of the fact that the present invention employs standard polymer materials, it is possible to tailor the mechanical as well as the shape memory properties of the materials with any given application. It is in particular possible to prepare shape memory polymers having a rather high transition temperature, a rather high temperature at which the change in shape can be initiated. This enables to use the materials in accordance with the present invention in a broad variety of applications. One prominent example thereof is the use of such shape memory materials for molded products which are used as fixing means for various products, such as household products, telecommunication products, computer products, in particular housings of such products. It is possible to use the shape memory materials in accordance with the present invention in that the temporary shape as products used for securing the integrity of such products, for example casings. Once standard instructions are desired to disassemble the product, it is merely necessary to heat the product formed from the shape memory material, so that the product changes from its temporary to its permanent shape. This permanent shape has previous been selected so that the desired function, i.e. securing the integrity of the casing, can no longer be fulfilled. Thereby, it is possible without further complicated processing steps to disassemble the product, for example in order to recover the different parts of the product for recycling purposes. Other suitable application fields are fastener device, packaging materials and sensors. In these fields of application it is possible to employ the standard thermoplastic polymers, modified as outlined in the present invention in order to obtain shape memory functionality. Thereby, cheaper shape memory materials are provided, enabling in particular the use of the materials of the invention in mass product markets, such as packaging materials, while benefiting from the unique material properties provided. Packaging materials for example may be provided enabling for example a better support of the packaged material, for example when the temperatures of the ambient atmosphere surpasses a certain threshold value. Other types of application can be envisaged by the skilled person, based on the above disclosed material properties.

The following examples display suitable commercially available starting materials and properties of the compounds as obtained after a crosslinking treatment in accordance with the present invention. Shape fixity and Shape recovery were evaluated using stress-strain experiments as disclosed in the patent applications of Memoscience GmbH. Typically 1mm thick sheets were used from which samples were cut for evaluation. Those samples were put into a suitable device for determining shape memory properties and heated to a temperature above the programming temperature such as Tg or Tm. Then the sample was elongated by 100% followed by cooling to at least 20° below the Tg or Tm explained above. Then the sample was relaxed and thereafter a reheating to the first temperature was carried out. The initial samples were prepared according to the following table by weighting out the starting materials and compounding in a twin screw extruder. In the table the abbreviations have the following meaning:
APEC 1745: polycarbonate manufactured by Bayer,
Borealis HD 120: polypropylene with medium melt viscosity manufactured by Borealis,
CAPA 6500: polycaprolactone, manufactured by Solvay,
Ecoflex FBX7011: PBT-copolymer, manufactured by BASF,
Frianyl A 63 VNGV: polyamide PA-6.6 comprising 30 weight-% glass fibres,
manufactured by Frisetta Polymers,
Griltex D 1666 A: polyamide copolymer, manufactured by EMS-Griltech,
Griltex D 1834 A: polyamide copolymer, manufactured by EMS-Griltech,
LE4201: peroxide containing LDPE, manufactured by Borealis,
Makrolon 2405: polycarbonate with low melt viscosity, manufactured by Bayer,
Makrolon 3108: polycarbonate with high melt viscosity, manufactured by Bayer,
Novodur H 801: styrene polymer, ABS, manufactured by Bayer,
Plexiglas hw55: methacrylic acid methyl ester copolymer, manufactured by Degussa,
Terluran GP 22: styrene polymer, ABS, manufactured by BASF,
Ultramid B3K: polyamide, PA-6, manufactured by BASF,
Vestamid E55: polyamide, PEBA (PA-12-b-polyTHF), manufactured by Degussa,
Vestamid L 1940: polyamide, PA-12, manufactured by Degussa,
Visico LE 4423 / Visico LE4438: polyolefine, trialkoxy silane containing LDPE (Ethylene
Vinyl Silane Copolymer), manufactured by Borealis,
Zeonor 750 R: cycloolefine copolymer, manufactured by ZEON,
Zeonor 1020R: cycloolefine copolymer, manufactured by ZEON,
NOR-TAIC KS: about 70 weight-% TAIC (triallylisocyanurate) on a carrier, manufactured
by NRC (Nordmann, Rassmann),
TAC: triallylcyanurate as liquid, and
TAIC M-60S: about 60 weight-% TAIC on calcium silikate.

| **Polymer 1** | **Polymer 1 amount In weight-%** | **Additiv 1** | **Additiv 1 amount In weight-%** | **β-irr. in kGy (E = 10 MeV)** | **DSC T_{G} °C** | **DSC T_{M} °C** | **shape recovery %** | **shape fixity %** | **Temperatur-programm °C** | **Init. Elong. %** |
|---|---|---|---|---|---|---|---|---|---|---|
| FrianylA63VNGV | 100 | | | | | 225 | | | | |
| FrianylA63VNGV | 100 | | 100 | | | 225 | | | | |
| FrianylA63VNGV | 97,1 | NOR-TAIC KS | 2,9 (2,0 TAIC) | 100 | | | 85 | 98 | | |
| Griltex D 1666 A | 98,6 | NOR-TAIC KS | 1,4 (1,0 TAIC) | | | | | | | |
| Griltex D 1666 A | 98,6 | NOR-TAIC KS | 1,4 (1,0 TAIC) | 70 | | | | | | |
| Griltex D 1666 A | 98,6 | NOR-TAIC KS | 1,4 (1,0 TAIC) | 100 | | | | | 90-10-90 | 100 |
| Griltex D 1666 A | 98.6 | NOR-TAIC KS | 1,4 (1,0 TAIC) | 130 | | | | | | |
| Griltex D 1666 A | 97,1 | NOR-TAIC KS | 2,9 (2,0 TAIC) | | | | | | | |
| Griltex D 1668 A | 97,1 | NOR-TAIC KS | 2,9 (2,0 TAIC) | 70 | | | | | | |
| Griltex D 1666 A | 97,1 | NOR-TAIC KS | 2,9 (2,0 TAIC) | 100 | | | 51 | 100 | 90-10-90 | 100 |
| Griltex D 1666 A | 97,1 | NOR-TAIC KS | 2,9 (2,0 TAIC) | 130 | | | | | | |
| Griltex D 1666 A | 94,3 | NOR-TAIC KS | 5,7 (4,0 TAIC) | | | | | | | |
| Griltex D 1666 A | 94,3 | NOR-TAIC KS | 5,7 (4,0 TAIC) | 70 | | | | | | |
| Griltex D 1666 A | 94,3 | NOR-TAIC KS | 5,7 (4,0 TAIC) | 100 | | | | | 90-10-90 | 100 |
| Griltex D 1666 A | 94,3 | NOR-TAIC KS | 5,7 (4,0 TAIC) | 130 | | | | | | |
| Griltex D 1834 A | | NOR-TAIC KS | 1,4 (1,0 TAIC) | | | | | | | |
| Griltex D 1834 A | | NOR-TAIC KS | 1,4 (1,0 TAIC) | 70 | | | | | | |
| Griltex D 1834 A | | NOR-TAIC KS | 1,4 (1,0 TAIC) | 100 | | | 4 | 98 | 110-20-110 | 100 |
| Griltex D 1834 A | | NOR-TAIC KS | 1,4 (1,0 TAIC) | 130 | | | | | | |
| Griltex D 1834 A | | NOR-TAIC KS | 2,9 (2,0 TAIC) | | | | | | | |
| Griltex D 1834 A | | NOR-TAIC KS | 2,9 (2,0 TAIC) | 70 | | | | | | |
| Griltex D 1834 A | | NOR-TAIC KS | 2,9 (2,0 TAIC) | 100 | | | | | | 100 |
| Griltex D 1834 A | | NOR-TAIC KS | 2,9 (2,0 TAIC) | 130 | | | | | | |
| Griltex D 1834 A | | | (4,0 TAIC) | | | | | | | |
| Griltex D 1834 A | | | (4,0 TAIC) | 70 | | | | | | |
| Griltex D 1834 A | | | (4,0 TAIC) | 100 | | | | | | |
| Griltex D 1834 A | | | (4,0 TAIC) | 130 | | | | | | |
| Griltex D 1834 A | | | | | | | | | | |
| Griltex D 1834 A | | | | 70 | | | | | | |
| Griltex D 1834 A | | | | 100 | | | | | | |
| Griltex D 1834 A | | | | 130 | | | | | | |
| Vestamid L 1940 | 96,7 | TAIC M-60S | 3,3 (2,0 TAIC) | | | | | | 180-20-180 | |
| Vestamid L 1940 | 96,7 | TAIC M-60S | 3,3 (2.0 TAIC) | 60 | | | 82 | 97 | 180-20-180 | 100 |
| Vestamid L 1940 | 96,7 | TAIC M-60S | 3,3 (2,0 TAIC) | 100 | | | 85 | 98 | 180-20-180 | 100 |
| Vestamid L 1940 | 96,7 | TAIC M-60S | 3.3 (2,0 TAIC) | 140 | | | 79 | 97 | 180-20-180 | 100 |
| Vestamid L 1940 | 100 | | | | | | | | | |
| Vestamid L 1940 | 100 | | | 60 | | | | | | |
| Vestamid L 1940 | 100 | | | 100 | | | | | 180-20-180 | 100 |
| | | | | | | | | | | |
| Vestamid L 1940 | 100 | | | 140 | | | | | | |
| CAPA 6500 | 96.7 | TAIC M-60S | 3.3 (2,0 TAIC) | | | | | | 60-20-60 | 100 |
| CAPA 6500 | 96,7 | TAIC M-60S | 3,3 (2,0 TAIC) | 60 | | | 79 | 99 | 60-20-60 | 100 |
| CAPA 6500 | 96,7 | TAIC M-60S | 3.3 (2,0 TAIC) | 100 | | | 88 | 99 | 60-20-60 | 100 |
| CAPA 6500 | 96,7 | TAIC M-60S | 3,3 (2,0 | 140 | | | 87 | 99 | 60-20-60 | 100 |
| LE4201R | 100 | | TAIC) | | | | | | | |
| Ecoflex FBX7011 | 96,7 | TAIC M-60S | 3,3 (2,0 TAIC) | | | | | | | |
| Ecoflex FBX7011 | 96,7 | TAIC M-60S | 3,3 (2,0 TAIC) | 60 | | | | | | |
| Ecoflex FBX7011 | 96,7 | TAIC M-60S | 3,3 (2,0 TAIC) | 100 | | | 55 | 98 | 120-20-120 | 100 |
| Ecoflex FBX7011 | 96,7 | TAIC M-60S | 3,3 (2.0 TAIC) | 140 | | | 68 | 99 | 120-20-120 | 100 |
| CAPA 6500 | 99,2 | TAIC M-60S | 0,8 (0,5 TAIC) | | | | | | | |
| CAPA 6500 | 99.2 | TAIC M-60S | 0,8 (0,5 TAIC) | 50 | | | | | | |
| CAPA 6500 | 99,2 | TAIC M-60S | 0,8 (0,5 TAIC) | 90 | | | 0 | 99 | 60-20-60 | 100 |
| CAPA 6500 | 99,2 | TAIC M-60S | 0,8 (0,5 TAIC) | 130 | | | | | | |
| CAPA 6500 | 98,3 | TAIC M-60S | 1,7 (1,0 TAIC) | | | | | | | |
| CAPA 6500 | 98.3 | TAIC M-60S | 1,7 (1,0 TAIC) | 50 | | | | | | |
| CAPA 6500 | 98,3 | TAIC M-60S | 1,7 (1,0 TAIC) | 90 | | | 65 | 99 | 60-20-60 | 100 |
| CAPA 6500 | 98.3 | TAIC M-60S | 1,7 (1,0 TAIC) | 130 | | | | | | |
| CAPA 6500 | 96,7 | TAIC M-60S | 3,3 (2,0 TAIC) | | | | | | | |
| CAPA 6500 | 96,7 | TAIC M-60S | 3.3 (2,0 TAIC) | 50 | | | | | | |
| CAPA 6500 | 96,7 | TAIC M-60S | 3,3 (2,0 TAIC) | 90 | | | 77 | 99 | 60-20-60 | 100 |
| CAPA 6500 | 96,7 | TAIC M-60S | 3,3 (2,0 TAIC) | 130 | | | | | | |
| CAPA 6500 | 93.3 | TAIC M-60S | 6,7 (4,0 TAIC) | | | | | | | |
| CAPA 6500 | 93.3 | TAIC M-60S | 6,7 (4,0 TAIC) | 50 | | | | | | |
| CAPA 6500 | 93.3 | TAIC M-60S | 6,7 (4,0 TAIC) | 90 | | | 88 | 99 | 60-20-60 | 100 |
| CAPA 6500 | 93,3 | TAIC M-60S | 6,7 (4,0 TAIC) | 130 | | | | | | |
| Visico LE 4423 | 90 | Visico LE4438 | 10 | | | | | | | |
| LE 4201 R | 100 | | | | | | | | | |
| Vestamid L 1940 | 99,2 | TAIC M-60S | 0,8 (0,5 TAIC) | | | | | | | |
| Vestamid L 1940 | 99,2 | TAIC M-60S | 0,8 (0,5 TAIC) | 50 | | | | | | |
| Vestamid L 1940 | 99,2 | TAIC M-60S | 0,8 (0,5 TAIC) | 90 | | | 0 | 98 | 180-20-180 | 100 |
| Vestamid L 1940 | 99,2 | TAIC M-60S | 0,8 (0,5 TAIC) | 130 | | | | | | |
| Vestamid L 1940 | 98,3 | TAIC M-60S | 1,7 (1,0 TAIC) | | | | | | | |
| Vestamid L 1940 | 98,3 | TAIC M-60S | 1,7 (1,0 TAIC) | 50 | | | | | | |
| Vestamid L 1940 | 98,3 | TAIC M-60S | 1,7 (1,0 TAIC) | 90 | | | 19 | 97 | 180-20-180 | 100 |
| Vestamid L 1940 | 98.3 | TAIC M-60S | 1,7 (1,0 TAIC) | 130 | | | | | | |
| | | | | | | | | | | |
| Vestamid L 1940 | 96,7 | TAIC M-60S | 3,3 (2,0 TAIC) | | | | | | | |
| Vestamid L 1940 | 96,7 | TAIC M-60S | 3,3 (2,0 TAIC) | 50 | | | | | | |
| Vestamid L 1940 | 96,7 | TAIC M-60S | 3,3 (2,0 TAIC) | 90 | | | 79 | 97 | 180-20-180 | 100 |
| Vestamid L 1940 | 96,7 | TAIC M-60S | 3,3 (2,0 TAIC) | 130 | | | | | | |
| Vestamid L 1940 | 93,3 | TAIC M-60S | 6,7 (4,0 TAIC) | | | | | | | |
| Vestamid L 1940 | 93,3 | TAIC M-60S | 6,7 (4,0 TAIC) | 50 | | | | | | |
| Vestamid L 1940 | 93,3 | TAIC M-60S | 6,7 (4,0 TAIC) | 90 | | | 85 | 97 | 180-20-180 | 100 |
| Vestamid L 1940 | 93,3 | TAIC M-60S | 6,7 (4,0 TAIC) | 130 | | | | | | |
| Ecoflex FBX7011 | 99,2 | TAIC M-60S | 0,8 (0,5 TAIC) | | | | | | | |
| Ecoflex FBX7011 | 99,2 | TAIC M-60S | 0,8 (0,5 TAIC) | 50 | | | | | | |
| Ecoflex FBX7011 | 99,2 | TAIC M-60S | 0,8 (0,5 TAIC) | 100 | | | | | | |
| Ecoflex FBX7011 | 99,2 | TAIC M-60S | 0,8 (0,5 TAIC) | 150 | | | | | | |
| Ecoflex FBX7011 | 98,3 | TAIC M-60S | 1,7 (1,0 TAIC) | | | | | | | |
| Ecoflex FBX7011 | 98.3 | TAIC M-60S | 1,7 (1,0 TAIC) | 50 | | | | | | |
| Ecoflex FBX7011 | 98,3 | TAIC M60S | 1,7 (1,0 TAIC) | 100 | | | | | | |
| Ecoflex FBX7011 | 98,3 | TAIC M-60S | 1,7 (1,0 TAIC) | 150 | | | | | | |
| Ecoflex FBX7011 | 96,7 | TAIC M-60S | 3.3 (2,0 TAIC) | | | | | | | |
| Ecoflex FBX7011 | 96,7 | TAIC M-60S | 3,3 (2,0 TAIC) | 50 | | | | | | |
| Ecoflex FBX7011 | 96,7 | TAIC M-60S | 3,3 (2.0 TAIC) | 100 | | | | | | |
| Ecoflex FBX7011 | 98,7 | TAIC M-60S | 3,3 (2,0 TAIC) | 150 | | | | | | |
| Ecoflex FBX7011 | 93.3 | TAIC M-60S | 6.7 (4.0 TAIC) | | | | | | | |
| Ecoflex FBX7011 | 93,3 | TAIC M-60S | 6,7 (4,0 TAIC) | 50 | | | | | | |
| Ecoflex FBX7011 | 93,3 | TAIC M-60S | 6,7 (4,0 TAIC) | 100 | | | | | | |
| Ecoflex FBX7011 | 93,3 | TAIC M-60S | 6,7 (4,0 TAIC) | 150 | | | | | | |
| Makrolon 3108 | 99,2 | TAIC M-60S | 0,8 (0,5 TAIC) | 0 | | | | | | |
| Makrolon 3108 | 99,2 | TAIC M-60S | 0,8 (0,5 TAIC) | 40 | | | | | | |
| Makrolon 3108 | 99,2 | TAIC M-60S | 0,8 (0,5 TAIC) | 80 | | | | | | |
| Makrolon 3108 | 99,2 | TAIC M-60S | 0,8 (0,5 TAIC) | 120 | | | | | | |
| Makrolon 3108 | 98,3 | TAIC M-60S | 1,7 (1,0 TAIC) | 0 | | | | | | |
| Makrolon 3108 | 98,3 | TAIC M-60S | 1,7 (1,0 TAIC) | 40 | | | | | | |
| Makrolon 3108 | 98,3 | TAIC M-60S | 1,7 (1,0 TAIC) | 80 | | | 52 | 89 | 150-90-150 | 50 |
| Makrolon 3108 | 98,3 | TAIC M-60S | 1,7 (1,0 TAIC) | 120 | | | | | | |
| Makrolon 3108 | 96,7 | TAIC M-60S | 3,3 (2,0 TAIC) | 0 | | | | | | |
| Makrolon 3108 | 96,7 | TAIC M-60S | 3,3 (2,0 TAIC) | 40 | | | | | | |
| Makrolon 3108 | 96,7 | TAIC M-60S | 3.3 (2.0 TAIC) | 80 | | | | | | |
| Makrolon 3108 | 96,7 | TAIC M-60S | 3,3 (2,0 TAIC) | 120 | | | | | | |
| Makrolon 3108 | 100 | | | 0 | | | | | | |
| Makrolon 3108 | 100 | | | 40 | | | 56 | 97 | 155-90-155 | 80 |
| Makrolon 3108 | 100 | | | 80 | | | 51 | 97 | 155-90-155 | 80 |
| Makrolon 3108 | 100 | | | 120 | | | 49 | 97 | 155-90-155 | 80 |
| Novodur H 801 | 100 | | | 0 | | | | | | |
| Novodur H 801 | 100 | | | 50 | | | | | | |
| Novodur H 801 | 100 | | | 90 | | | | | | |
| Novodur H 801 | 100 | | | 130 | | | | | | |
| Novodur H 801 | 98.3 | | | 0 | | | | | | |
| Novodur H 801 | 98,3 | | | 50 | | | | | | |
| Novodur H 801 | 98,3 | | | 90 | | | | | | |
| Novodur H 801 | 98,3 | | | 130 | | | | | | |
| Novodur H 801 | 96,7 | | | 0 | | | | | | |
| Novodur H 801 | 96,7 | | | 50 | | | | | | |
| Novodur H 801 | 96,7 | | | 90 | | | | | | |
| Novodur H 801 | 96,7 | | | 130 | | | | | | |
| Terluran GP 22 | 100 | | | 0 | | - | 58 | 97 | 110-30-110 | 100 |
| Terluran GP 22 | 100 | | | 50 | | - | 20 | 97 | 110-30-110 | 100 |
| Terluran GP 22 | 100 | | | 90 | 104,5 | - | 17 | 97 | 110-30-110 | 100 |
| Terluran GP 22 | 100 | | | 130 | | - | | | 110-30-110 | 100 |
| Terluran GP 22 | 99,2 | TAIC M-60S | 0,8 (0,5 TAIC) | 0 | | - | 26 | 97 | 110-30-110 | 100 |
| Terluran GP 22 | 99,2 | TAIC M-60S | 0,8 (0,5 TAIC) | 50 | | - | 55 | 97 | 110-30-110 | 100 |
| Terluran GP 22 | 99,2 | TAIC M-60S | 0,8 (0,5 TAIC) | 90 | 103,5 | - | 47 | 97 | 110-30-110 | 100 |
| GP 22 | 99,2 | TAIC M-60S | 0,8 (0,5 TAIC) | 130 | | - | | | 110-30-110 | 100 |
| Terluran GP 22 | 98,3 | TAIC M-60S | 1,7 (1,0 TAIC) | 0 | | - | 47 | 97 | 110-30-110 | 100 |
| Terluran GP 22 | 98,3 | TAIC M-60S | 1,7 (1,0 TAIC) | 50 | | - | 28 | 97 | 110-30-110 | 100 |
| Terluran GP 22 | 98,3 | TAIC M-60S | 1,7 (1,0 TAIC) | 90 | 98.7 | - | 39 | 97 | 110-30-110 | 100 |
| Terluran GP 22 | 98,3 | TAIC M-60S | 1,7 (1,0 TAIC) | 130 | | - | | | 110-30-110 | 100 |
| Terluran GP 22 | 96,7 | TAIC M-60S | 3,3 (2,0 TAIC) | 0 | 98.4 | - | 38 | 97 | 110-30-110 | 100 |
| Terluran GP 22 | 96,7 | TAIC M-60S | 3,3 (2,0 TAIC) | 50 | 98,4 | - | | | 110-30-110 | 100 |
| Terluran GP 22 | 96,7 | TAIC M-60S | 3,3 (2,0 TAIC) | 90 | 99,0 | - | 21 | 97 | 110-30-110 | 100 |
| Terluran GP 22 | 96,7 | TAIC M-60S | 3,3 (2,0 TAIC) | 130 | 99,1 | - | 22 | 97 | 110-30-110 | 100 |
| Terluran GP 22 | 93,3 | TAIC M-60S | 6,7 (4,0 TAIC) | 0 | | | 0 | 97 | 110-30-110 | 100 |
| Terluran GP 22 | 93,3 | TAIC M-60S | 6,7 (4,0 TAIC) | 50 | | | | | 110-30-110 | 100 |
| Terluran GP 22 | 93,3 | TAIC M-60S | 6,7 (4,0 TAIC) | 90 | 94,2 | | | | 110-30-110 | 100 |
| Terluran GP 22 | 93,3 | TAIC M-60S | 6,7 (4,0 TAIC) | 130 | | | 29 | 97 | 110-30-110 | 100 |
| Vestamid L1940 | 90 | TAIC M-60S | 10 (6,0 TAIC) | 0 | | | | | | 100 |
| Vestamid L1940 | 90 | TAIC M-60S | 10 (6,0 TAIC) | 50 | | | | | | 100 |
| Vestamid L1940 | 90 | TAIC M-60S | 10 (6,0 TAIC) | 90 | | | | | 180-20-180 | 100 |
| Vestamid L1940 | 90 | TAIC M-60S | 10 (6,0 TAIC) | 130 | | | | | .180-20-180 | 100 |
| Plexiglas hw55 | 100 | | | | | | | | | |
| Plexiglas hw55 | 100 | | | | | | | | | |
| Plexiglas hw55 | 100 | | | | | | | | | |
| Plexiglas hw55 | 100 | | | | | | | | | |
| Zeonor 750 R | 100 | | | | | | | | | |
| Zeonor 750 R | 100 | | | | | | | | | |
| Zeonor 750 R | 100 | | | | | | | | | |
| Zeonor750 R | 100 | | | | | | | | | |
| Makrolon 2405 | 100 | | | | | | | | | |
| Makrolon 2405 | 100 | | | | | | 44 | 97 | 155-90-155 | 80 |
| Makrolon 2405 | 100 | | | | | | 0 | 97 | 155-90-155 | 80 |
| Makrolon 2405 | 100 | | | | | | 0 | 97 | 155-90-155 | 80 |
| Vestamid E 55 | 100 | | | 0 | 31 | 166 | | | | |
| Vestamid E 55 | 100 | | | 50 | | | | | | |
| Vestamid E 55 | 100 | | | 100 | | | | | | |
| Vestamid E 55 | 100 | | | 150 | | 165 | | | | |
| Vestamid E 55 | 99,2 | TAIC M-60S | 0,8 (0,5 TAIC) | 0 | | | | | | |
| Vestamid E 55 | 99,2 | TAIC M-60S | 0,8 (0,5 TAIC) | 50 | | | | | | |
| Vestamid E 55 | 99,2 | TAIC M-60S | 0,8 (0,5 TAIC) | 100 | | | | | | |
| Vestamid E 55 | 99,2 | TAIC M-60S | 0,8 (0,5 TAIC) | 150 | | | | | | |
| Vestamid E 55 | 98,3 | TAIC M-60S | 1,7 (1,0 TAIC) | 0 | | | | | | |
| Vestamid E 55 | 98,3 | TAIC M-60S | 1,7 (1,0 TAIC) | 50 | | | | | | |
| Vestamid E 55 | 98,3 | TAIC M-60S | 1,7 (1,0 TAIC) | 100 | | | | | | |
| Vestamid E 55 | 98,3 | TAIC M-60S | 1,7 (1,0 TAIC) | 150 | | | | | | |
| Vestamid E 55 | 96,7 | TAIC M-60S | 3,3 (2,0 TAIC) | 0 | 30 | 166 | | | | |
| Vestamid E 55 | 96,7 | TAIC M-60S | 3,3 (2,0 TAIC) | 50 | | | | | | |
| Vestamid E 55 | 96,7 | TAIC M-60S | 3,3 (2,0 TAIC) | 100 | | | | | | |
| Vestamid E 55 | 96,7 | TAIC M-60S | 3,3 (2,0 TAIC) | 150 | | 158 | | | | |
| Vestamid E 55 | 93,3 | TAIC M-60S | 6,7 (4,0 TAIC) | 0 | | | | | | |
| Vestamid E 55 | 93,3 | TAIC M-60S | 6,7 (4,0 TAIC) | 50 | | | | | | |
| Vestamid E 55 | 93,3 | TAIC M-60S | 6,7 (4,0 TAIC) | 100 | | | | | | |
| Vestamid E 55 | 93,3 | TAIC M-60S | 6,7 (4,0 TAIC) | 150 | | | | | | |
| LS 4201 S | 100 | | | | | | | | | |
| Zeonor 1020R | 100 | | | | | | | | | |
| Zeonor 1020R | 100 | | | 60 | | | | | | |
| Zeonor 1020R | 100 | | | 120 | | | | | | |
| Zeonor 1020R | 100 | | | 180 | | | | | | |
| Zeonor 1020R | 96,7 | TAlC M-60S | 3,3 (2,0 TAlC) | | | | | | | |
| Zeonor 1020R | 96,7 | TAlC M-60S | 3,3 (2,0 TAlC) | 50 | | | | | | |
| Zeonor 1020R | 96,7 | TAlC M-60S | 3,3 (2,0 TAlC) | 100 | | | | | | |
| Zeonor 1020R | 96,7 | TAlC M-60S | 3,3 (2,0 TAlC) | 150 | | | | | | |
| Borealis HD 120 | 100 | | | | | | | | | |
| Borealis HD 120 | 100 | | | 100 | | | | | | |
| Borealis HD 120 | 100 | | | 150 | | | | | | |
| Borealis HD 120 | 100 | | | 200 | | | | | | |
| Borealis HD 120 | 96,7 | TAlC M-60S | 3,3 (2,0 TAlC) | | | | | | | |
| Borealis HD 120 | 96,7 | TAlC M-60S | 3,3 (2,0 TAlC) | 50 | | | | | | |
| Borealis HD 120 | 96,7 | TAlC M-60S | 3,3 (2,0 TAlC) | 100 | | | | | | |
| Borealis HD 120 | 96,7 | TAlC M-60S | 3,3 (2,0 TAlC) | 150 | | | | | | |
| APEC 1745 | 100 | | | 0 | | | | | | |
| APEC 1745 | 100 | | | 40 | | | | | | |
| APEC 1745 | 100 | | | 80 | | | | | | |
| APEC 1745 | 100 | | | 120 | | | | | | |
| Visico LE 4423 | 90 | | | | | | | | | |
| Makrolon 2405 | 99 | TAC | 1,0 | | | | | | | |
| Makrolon 2405 | 99 | TAC | 1,0 | | | | | | | |
| Makrolon 2405 | 99 | TAC | 1,0 | | | | | | | |
| Makrolon 2405 | 99 | TAC | 1,0 | | | | | | | |
| Makrolon 2405 | 98 | TAC | 2,0 | | | | | | | |
| Makrolon 2405 | 98 | TAC | 2,0 | | | | | | | |
| Makrolon 2405 | 98 | TAC | 2,0 | | | | | | | |
| Makrolon 2405 | 98 | TAC | 2,0 | | | | | | | |
| Ultramid B3K | 100 | | | | | | | | | |
| Ultramid B3K | 100 | | | | | | | | | |
| Ultramid B3K | 100 | | | | | | | | | |
| Ultramid B3K | 100 | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |
| Ultramid B3K | | | | | | | | | | |

In orienting experiments the following polymers were also found to be useful for the present invention, as high shape fixity values of > 95 % and high shape recovery values of > 50 % were achievable when using them in the crosslinking method according to the invention: polyamide PA-6.6, e.g. Ultramid A3K manufactured by BASF; transparent polyamides, e.g. Grilamid TR 90LX manufactured by EMS-Grivory or Trogamid CX7323, manufactured by Degussa; polyamide copolymers, e.g. Vestamelt 251 manufactured by Degussa; polyacrylates, e.g. Plexiglas 6N or 8N manufactured by Degussa or Surlyn 8527 manufactured by Dupont; cycloolefine copolymers, e.g. Zeonor 750 R or 1020 R manufactured by ZEON; styrene polymers such as SAN, e.g. Luran 368 R manufactured by BASF.

## Claims

1. Method of preparing a shape memory material, which enables recovery of a previously programmed shape induced by an external stimulus after deformation to a temporary shape, the method comprising
- providing a mixture of at least one polymer and at least one shape memory additive,
wherein the shape memory additive comprises reactive particles having reactive groups on their surface,
- subjecting the mixture to a forming process,
- followed by subjecting the formed body obtained to a post processing treatment so that the shape memory additive provides chemical or physical crosslinks between different chains of the polymer and/or between the shape memory additives.

2. Method according to claim 1, wherein the polymer is selected from polyamides, polyesters, polycarbonates, polyolefins, vinyl polymers, styrene polymers and mixtures thereof.

3. Method according to any of claims 1 or 2, wherein the shape memory additive comprises reactive fillers.

4. Method in accordance with any of claims 1, 2, or 3, wherein the post processing treatment is selected among heat treatment and irradiation.

5. Method in accordance with any of claims 1, 2, 3, or 4, wherein the method further comprises the steps of deforming the formed body to any desired shape under appropriate conditions and fixing the deformed shape.

6. Shape memory material, obtainable by a method in accordance with any of claims 1 to 5.

7. Shape memory material in accordance with claim 6, further comprising additional components selected among usual additives for polymers, such as colorants, stabilizers, processing aids, UV absorbers, fillers, antioxidants, reinforcement agents, or other auxiliary agents, alone or in any mixture.

8. Shape memory material in accordance with claim 6 or 7, comprising a polymer selected from polyamides, polyesters, polycarbonates, polyolefins, vinyl polymers, styrene polymers as well as mixtures thereof and crosslinks derived from crosslinking agents activated by heat treatment.

9. Shape memory material in accordance with any of claims 6, 7, or 8, wherein the shape memory material has a transition temperature of between 20 and 80 °C.

10. Shape memory material in accordance with any of claims 6, 7, or 8, wherein the shape memory material has a transition temperature of above 80°C.

11. Shape memory material in accordance with any of claims 6, 7, 8, 9 or 10, wherein the shape memory material comprises a mixture of at least two polymers.

12. Use of a shape memory material in accordance with any of claims 6 to 11 for preparing molded parts of household products, toys, telecommunication products, computer products, automobiles, medicinal products or aviation products.

13. Use according to claim 12, wherein the molded part in the temporary, deformed shape serves as a connecting part in any of the products defined in claim 12, wherein the permanent shape is able to maintain the function of serving as connecting part, so that a facilitated disassembly is enabled.

## Patentansprüche

1. Verfahren zur Herstellung eines Formgedächtnismaterials, das die durch einen externen Stimulus induzierte Wiederherstellung einer vorher programmierten Form nach Umformung zu einer temporären Form ermöglicht, wobei das Verfahren umfasst:
- Bereitstellen eines Gemisches aus mindestens einem Polymer und mindestens einem Formgedächtnisadditiv,
wobei das Formgedächtnisadditiv reaktive Partikel mit reaktiven Gruppen auf ihrer Oberfläche umfasst,
- Unterwerfen des Gemischs einem Formgebungsverfahren,
- gefolgt vom Unterwerfen des erhaltenen Formkörpers einer Nachbehandlung, sodass das mindestens eine Formgedächtnisadditiv chemische oder physikalische Vernetzungen zwischen verschiedenen Ketten des Polymers und/oder zwischen den Formgedächtnisadditiven bewirkt.

2. Verfahren nach Anspruch 1, wobei das Polymer ausgewählt ist aus Polyamiden, Polyestern, Polycarbonaten, Polyolefinen, Vinylpolymeren, Styrolpolymeren und Gemischen davon.

3. Verfahren nach einem der Ansprüche 1 oder 2, wobei das Formgedächtnisadditiv reaktive Füllstoffe umfasst.

4. Verfahren nach einem der Ansprüche 1, 2 oder 3, wobei die Nachbehandlung ausgewählt ist aus Wärmebehandlung und Bestrahlung.

5. Verfahren nach einem der Ansprüche 1, 2, 3 oder 4, wobei das Verfahren weiterhin die Schritte des Umformens des Formkörpers zu einer beliebigen gewünschten Form unter geeigneten Bedingungen und des Fixierens der umgeformten Form umfasst.

6. Formgedächtnismaterial, das durch ein Verfahren nach einem der Ansprüche 1 bis 5 erhältlich ist.

7. Formgedächtnismaterial nach Anspruch 6, das weiterhin zusätzliche Komponenten, ausgewählt aus üblichen Additiven für Polymere, wie Farbstoffen, Stabilisatoren, Verarbeitungshilfsmitteln, UV-Absorbern, Füllstoffen, Antioxidantien, Verstärkungsmitteln oder anderen Hilfsmitteln, allein oder in einem Gemisch umfasst.

8. Formgedächtnismaterial nach Anspruch 6 oder 7, das ein Polymer, ausgewählt aus Polyamiden, Polyestern, Polycarbonaten, Polyolefinen, Vinylpolymeren, Styrolpolymeren sowie Gemischen davon, und Vernetzungen, abgeleitet von durch Wärmebehandlung aktivierten Vernetzungsmitteln, umfasst.

9. Formgedächtnismaterial nach einem der Ansprüche 6, 7 oder 8, wobei das Formgedächtnismaterial eine Übergangstemperatur von zwischen 20 und 80 °C aufweist.

10. Formgedächtnismaterial nach einem der Ansprüche 6, 7 oder 8, wobei das Formgedächtnismaterial eine Übergangstemperatur von über 80 °C aufweist.

11. Formgedächtnismaterial nach einem der Ansprüche 6, 7, 8, 9 oder 10, wobei das Formgedächtnismaterial ein Gemisch aus mindestens zwei Polymeren umfasst.

12. Verwendung eines Formgedächtnismaterials nach einem der Ansprüche 6 bis 11 zur Herstellung von Formteilen von Haushaltsprodukten, Spielwaren, Telekommunikationsprodukten, Computerprodukten, Automobilen, medizinischen Produkten oder Produkten für die Luftfahrt.

13. Verwendung nach Anspruch 12, wobei das Formteil in der temporären, umgeformten Form als Verbindungsteil in einem der in Anspruch 12 definierten Produkte dient, wobei die permanente Form in der Lage ist, die Funktion des Dienens als Verbindungsteil beizubehalten, sodass eine erleichterte Demontage ermöglicht wird.

## Revendications

1. Méthode de préparation d'un matériau à mémoire de forme, permettant la reprise d'une forme programmée antérieurement déclenchée par un stimulus externe après déformation en une forme temporaire, la méthode comprenant
- fournir un mélange d'au moins un polymère et d'au moins un additif de mémoire de forme,
l'additif de mémoire de forme comprenant des particules réactives ayant des groupes réactifs à leur surface,
- appliquer au mélange un procédé de formage,
- suivi par appliquer au corps formé un procédé de post-traitement, de telle sorte que l'au moins un additif de mémoire de forme produit des réticulations chimiques ou physiques entre les différentes chaînes du polymère et/ou entre les additifs de mémoire de forme.

2. Méthode selon la revendication 1, le polymère étant sélectionné parmi des polyamides, des polyesters, des polycarbonates, des polyoléfines, des polymères vinyliques, des polymères styréniques et des mélanges de ceux-ci.

3. Méthode selon l'une quelconque des revendications 1 ou 2, l'additif de mémoire de forme comprenant des charges réactives.

4. Méthode selon l'une quelconque des revendications 1, 2 ou 3, le procédé de post-traitement étant sélectionné entre le traitement thermique et l'irradiation.

5. Méthode selon l'une quelconque des revendications 1, 2, 3 ou 4, la méthode comprenant en outre les étapes de déformer le corps formé en une quelconque forme souhaitée, sous des conditions appropriées, et de fixer la forme déformée.

6. Matériau à mémoire de forme, pouvant être obtenu par une méthode conforme à l'une quelconque des revendications 1 à 5.

7. Matériau à mémoire de forme selon la revendication 6, comprenant en outre des composants supplémentaires sélectionnés parmi les additifs usuels pour les polymères, tels que colorants, stabilisateurs, auxiliaires technologiques, absorbants UV, charges, antioxydants, agents de renforcement ou autres agents auxiliaires, seuls ou dans un mélange quelconque.

8. Matériau à mémoire de forme selon la revendication 6 ou 7, comprenant un polymère sélectionné parmi des polyamides, des polyesters, des polycarbonates, des polyoléfines, des polymères vinyliques, des polymères styréniques et des mélanges de ceux-ci, et de réticulations dérivées des agents de réticulations activés par traitement thermique.

9. Matériau à mémoire de forme selon l'une quelconque des revendications 6, 7 ou 8, le matériau à mémoire de forme ayant une température de transition de entre 20 et 80 °C.

10. Matériau à mémoire de forme selon l'une quelconque des revendications 6, 7 ou 8, le matériau à mémoire de forme ayant une température de transition supérieure à 80 °C.

11. Matériau à mémoire de forme selon l'une quelconque des revendications 6, 7, 8, 9 ou 10, le matériau à mémoire de forme comprenant un mélange d'au moins deux polymères.

12. Utilisation d'un matériau à mémoire de forme selon l'une quelconque des revendications 6 à 11 pour préparer des pièces moulées de produits ménagers, jouets, produits de télécommunication, produits informatiques, automobiles, produits médicaux ou produits aéronautiques.

13. Utilisation selon la revendication 12, la pièce moulée dans la forme temporaire déformée servant comme pièce de connexion dans l'un quelconque des produits définis à la revendication 12, la forme permanente étant capable de maintenir la fonction de servir de pièce de connexion, afin qu'un démontage facilité soit possible.
